# EUROPÄISCHE PATENTSCHRIFT

(11) **EP 3 659 859 B1**
(45) Veröffentlichungstag und Bekanntmachung des Hinweises auf die Patenterteilung: **29.12.2021**
(21) Anmeldenummer: 19203537.6
(22) Anmeldetag: 16.10.2019
(51) Int. Cl.: B60N 2/58, B60N 2/60, B60N 2/90

(54) **FAHRZEUGSITZ MIT ABRIEBSCHUTZ**
VEHICLE SEAT WITH ABRASION GUARD
SIÈGE DE VÉHICULE À PROTECTION CONTRE L'ABRASION

(30) Priorität: 23.10.2018 DE 102018126360
(43) Veröffentlichungstag der Anmeldung: 03.06.2020
(73) Patentinhaber: GRAMMER AG, 92289 Ursensollen (DE)
(72) Erfinder: Herbst, Gerald, 92237 Sulzbach-Rosenberg (DE); Wellein, Martin, 93059 Regensburg (DE)
(74) Vertreter: Hannke, Christian

(56) Entgegenhaltungen:
- EP-A2- 1 882 610
- FR-A1- 2 942 423
- JP-A- 2005 246 048
- JP-A- 2005 329 090
- US-A1- 2013 225 019

## Beschreibung

Die Erfindung betrifft einen Fahrzeugsitz für ein Fahrzeug, insbesondere für ein Nutzfahrzeug, mit einer Rückenlehne und einem Sitzteil, welche jeweils beide einen inneren Abschnitt und beidseits seitlich des inneren Abschnitts angeordnete Wangenabschnitte aufweisen, wobei die inneren Abschnitte und die Wangenabschnitte jeweils ein Polsterteil und ein dieses zumindest teilweise umgebendes Bezugteil aufweisen.

Vor allem bei Stapler- oder Baumaschinensitzen ist der Materialverschleiß im Gebrauch erheblich. Dabei besonders betroffen sind die Polsterseitenwangen oder auch Wangenabschnitte im Aus- bzw. Einstiegsbereich des Fahrers. Die Reib- und Scherbeanspruchung, vor allem auf die Polsterseitenwangen, führt in geraumer Zeit, je nach Belastungsdauer, Fahrer, Anwendung und klimatischen Bedingungen zum Abrieb, bis hin zum Garnbruch, Riss oder zur Lochbildung des Oberflächenmaterials. Ist dies geschehen, setzt sich die Schädigung über das Schaumteil oder Polsterteil fort bis hin zum Bruch der gesamten Wangen.

Polsterteile derartiger Sitze werden beispielsweise konventionell geschäumt und anschließend mit einem geeigneten Bezugteil bezogen. Ein alternatives Verfahren sieht vor, dass das Bezugteil erst in die gewünschte Form tiefgezogen und dann hinterschäumt wird. Als Bezugteil wird in der Regel Maschenware oder PVC mit integrierter Maschenware eingesetzt. Da es gerade bei dem alternativen Verfahren auf ein gutes Dehnverhalten des Oberflächenmaterials ankommt, ist es also nicht angeraten, eine höhere Verschleißfestigkeit des gesamten Sitzes dadurch erzielen zu wollen, dass für das Bezugteil ein Material mit einer höheren Steifigkeit verwendet würde. Des Weiteren wird beim Tiefziehprozess das Material des Bezugteils mehr oder weniger gedehnt und somit aber auch partiell geschwächt. Gerade im Bereich der Seitenwangen erfährt das Material in der Regel die größte Ziehtiefe und wird dort, wo später auch die höchste mechanische Beanspruchung stattfindet, vorbelastet.

EP 1 832 610 A2 zeigt einen Fahrzeugsitz und dafür geeignete Substrate. Der Fahrzeugsitz ist ausgestattet mit Sitzkissen und Rückenlehne, bei dem die der nächstgelegenen Türe nahen Teilbereiche der Oberfläche des Fahrzeugsitzes aus einem hochabriebfesten Substrat gefertigt beziehungsweise damit bezogen sind.

Aufgabe der vorliegenden Erfindung ist also, einen Fahrzeugsitz oder Sitz zu entwickeln, welcher einen erhöhten Abriebschutz an den belasteten Stellen aufweist.

Die Aufgabe der vorliegenden Erfindung wird gelöst von einem Fahrzeugsitz für ein Fahrzeug mit einem Rückenlehnenteil und einem Sitzteil, welche jeweils beide einen inneren Abschnitt und beidseits seitlich des inneren Abschnitts angeordnete Wangenabschnitte aufweisen, wobei die inneren Abschnitte und die Wangenabschnitte jeweils ein Polsterteil und ein dieses zumindest teilweise umgebendes Bezugteil aufweisen, wobei auf mindestens eines der Bezugteile zumindest partiell eine abriebfeste Beschichtung angeordnet ist, welche eine höhere Härte und/oder Steifigkeit als das mindestens eine Bezugteil aufweist, und wobei die abriebfeste Beschichtung Partikel aufweist, welche auf Glas, Keramik oder Metall basieren und bevorzugt in eine Bindermatrix aus einem Polymerkleber eingebunden sind.

Es wird also durch eine zusätzliche Beschichtung auf den Bezugteilen und durch die Auswahl der Eigenschaften der Beschichtung dafür gesorgt, dass der Abrieb des Bezugteils und damit die Schädigung des Polsterteils und des gesamten Sitzes minimiert ist. Dadurch wird vermieden, dass Sitze vorzeitig verschleißen und ausgetauscht werden müssen. Durch die Beschichtung wird also am Sitz zumindest partiell ein funktioneller Bereich geschaffen, welcher auch als Protektor oder Polsterprotektor bezeichnet werden kann.

Bevorzugt ist die dem Fahrer zugewandte Schicht des Sitzes, mithin die oberste Schicht ausgehend vom Polsterteil als innerster Schicht, entweder mittels des Bezugteils oder mittels der abriebfesten Beschichtung ausgestaltet. Bevorzugt ist also der Sitz frei von weiteren, auf dem Bezugteil oder den Bezugteilen angeordneten Schichten und/oder sonstigen Elementen. Bevorzugt sind die Eigenschaften der Beschichtung wie Härte oder Zugfestigkeit über eine gesamte Dicke, Länge und/oder Breite der Beschichtung gleich.

Das Bezugteil, welches auch als Substrat bezeichnet werden kann, sowie die Beschichtung müssen generell hinsichtlich ihrer mechanischen, physikalischen und chemischen Eigenschaften gängigen Automotive-Standards entsprechen.

Die Eigenschaften des Bezugteils sind auch maßgeblich für den Verarbeitungsprozess verantwortlich. Die Beschichtung muss so ausgeführt sein, dass bei einer mechanischen Beanspruchung des Bezugteils (beispielsweise in Form einer Dehnung oder einer Scherung) die Haftung zwischen der Beschichtung und dem Bezugteil gewährleistet ist.

Dabei kann die Beschichtung beispielsweise auf den fertig geschäumten und fertig geformten Sitz aufgetragen werden. Besonders vorteilhaft ist es jedoch, wenn die Beschichtung bereits vorab auf das Bezugteil aufgebracht ist, bevor das Bezugteil geformt wird. Das Formen des Bezugteils erfolgt bevorzugt mittels Tiefziehens. Anschließend kann das mit der Beschichtung versehene tiefgezogene Bezugteil in eine Form eingelegt und mit einem weiteren Material, welches nach Aushärten das Polsterteil ausbildet, hinterschäumt werden.

Wenn ein Zuschnitt der Bezugteile des Sitzteils nur partiell mit der Beschichtung versehen ist, wird dieser vorteilhaft mit mehreren Markierungen (z.B. Striche, Kerben) versehen, welche zur Ausrichtung des Zuschnitts in der Schäumform notwendig sind, damit beim Tiefziehprozess die partiell beschichtete Fläche in die gewünschte Position (z.B. im Wangenabschnitt) gebracht werden kann. Bei der Auslegung der zu beschichteten Fläche muss die Dehnung des Bezugteils in Abhängigkeit des Polsterdesigns berücksichtigt werden, das heißt, die mit der Beschichtung zu versehende Oberfläche und deren Position werden vorab im entsprechenden Schäumwerkzeug am tiefgezogenen, also gedehnten Bezugteil erfasst und schließlich auf den nicht gedehnten Zuschnitt des Bezugteils abgewickelt. Die Daten der Oberfläche im nicht gedehnten Zustand und deren Position sind Grundlage für die partielle Beschichtung des Materialzuschnittes.

Es ist vorteilhaft die Beschichtung auf einer ersten Oberfläche des Bezugteils und das Polsterteil auf einer zweiten Oberfläche des Bezugteils angeordnet, wobei die erste Oberfläche abgewandt zur zweiten Oberfläche angeordnet ist.

Dabei können die Bezugteile und/oder die Polsterteile des Sitzteils und des Rückenlehnenteils jeweils einzeln oder zeitgleich miteinander gefertigt werden.

Bevorzugt sind alle Bezugteile und/oder alle Polsterteile des Sitzteils zueinander einstückig ausgebildet. Bevorzugt sind alle Bezugteile und/oder alle Polsterteile des Rückenlehnenteils zueinander einstückig ausgebildet. Mit anderen Worten werden bevorzugt das Sitzteil und/oder das Rückenlehnenteil als ein Teil gefertigt.

Bevorzugt sind bei jedem inneren Abschnitt und bei jedem Wangenabschnitt, welcher mit einer Beschichtung versehen ist, das Bezugteil, das Polsterteil und die Beschichtung mechanisch fest miteinander verbunden. Dies gilt bevorzugt für den inneren Abschnitt und für die Wangenabschnitte des Sitzteils und/oder des Rückenlehnenteils.

Damit wird die Montage eines derartigen Sitzes, aber auch der Austausch einzelner Komponenten, wesentlich erleichtert.

Ein geeignetes Material des Bezugteils ist beispielsweise ein Kunstleder aus PVC (Polyvinylchlorid; auch "Vinyl" genannt) oder Polyurethan (PU). Ferner ist es möglich, einen gewebten oder gestrickten Stoff als Material des Bezugteils zu verwenden.

Die Beschichtung kann beispielsweise über ein Druckverfahren wie Schablonendruck auf das Bezugteil aufgebracht werden.

Alternativ kann die noch nicht ausgehärtete Beschichtung als Paste vorliegen, welche auf das Bezugteil aufgebracht und anschließend mittels einer Rakel gleichmäßig verteilt wird, was allgemein als Rakeln bezeichnet wird.

Erfindungsgemäß hat es sich erwiesen, wenn die abriebfeste Beschichtung Partikel aufweist, welche auf Glas, Keramik oder Metall basieren und bevorzugt in eine Bindermatrix aus einem Polymerkleber eingebunden sind. Dabei wird unter dem Begriff Partikel ein Material verstanden, welches sich vom umgebenden, kontinuierlichen Medium (Polymerkleber) durch eine Phasengrenzfläche unterscheidet. Beispielsweise basiert der Polymerkleber auf Polyurethan (PU).

Es kann vorteilhaft sein, wenn der gesamte Sitz und somit alle Bezugteile des Sitzes mit einer Beschichtung versehen sind. Da es aus der Praxis jedoch bekannt ist, dass vor allem die Wangenabschnitte am meisten belastet sind, kann es aus Kostengründen vorteilhaft sein, wenn die abriebfeste Beschichtung ausschließlich auf nur einem oder auf mindestens zwei der Bezugteile der Wangenabschnitte angeordnet ist.

Es sind die inneren Abschnitte bevorzugt frei von der Beschichtung.

Dabei sind die Wangenabschnitte des Sitzteils wiederum einer höheren Belastung ausgesetzt als die Wangenabschnitte des Rückenlehnenteils, da der Fahrer zwangsläufig bei jedem Einund Aussteigen die Wangenabschnitte des Sitzteils touchiert, nicht unbedingt jedoch auch die Wangenabschnitte des Rückenlehnenteils. Es ist also gemäß einer weiteren bevorzugten Variante bevorzugt, wenn lediglich einer oder beide Wangenabschnitte des Sitzteils mit einer Beschichtung versehen ist/sind und gleichzeitig beide inneren Abschnitte und die Wangenabschnitte des Rückenlehnenteils frei von der Beschichtung sind.

Bei jeder genannten Ausführungsform kann die Beschichtung vollflächig ausgestaltet sein oder sich lediglich über einen Teilbereich des jeweiligen Bezugteils erstrecken. Dieser Teilbereich kann zusammenhängend sein. Alternativ kann der Teilbereich auf mehrere einzelne, nicht-zusammenhängende Bereiche aufgeteilt sein. Letztere Ausführungsform ist vorteilhaft, da somit eine zusammenhängende Beschichtung vermieden wird, deren Steifigkeit das Tiefziehverhalten des Bezugteils gegebenenfalls negativ beeinflussen könnte.

Es ist also gemäß einer bevorzugten Ausführungsform vorteilhaft, wenn das mindestens eine Bezugteil erste Oberflächenanteile, welche vollflächig mit der abriebfesten Beschichtung versehen sind, und zweite Oberflächenanteile, welche frei von der abriebfesten Beschichtung sind, aufweist. Beispielsweise sind die ersten und/oder zweiten Oberflächenanteile homogen über die gesamte Oberfläche des mindestens einen Bezugteils verteilt.

Im Sinne der vorliegenden Erfindung wird ein Quotient aus einem Gesamtinhalt der ersten Oberflächenanteile zu einem Gesamtinhalt der zweiten Oberflächenanteile als eine Aufbringdichte der Beschichtung verstanden. Dabei wird der Quotient für einen Teil der gesamten Oberfläche des Bezugteils betrachtet, wobei dieser Teil der gesamten Oberfläche vorbestimmt und für die Betrachtung jeweils gleich ist.

Beispielsweise ist die Aufbringdichte über die gesamte Oberfläche des mindestens einen Bezugteils konstant. Diese Aufbringdichte ist nicht zu verwechseln mit der reinen Materialdichte der Beschichtung, welche bekanntermaßen den Quotienten aus der Masse und dem Volumen der Beschichtung darstellt.

Allerdings hat es sich in der Praxis gezeigt, dass die Belastung der Bezugteile des Sitzteils an einer Außenseite des Sitzes, also beispielsweise im Ausstiegsbereich bei Gabelstaplersitzen, am höchsten ist. Gerade diese Bereiche werden durch oftmaliges Ein- und Aussteigen extrem reib- und scherbeansprucht, was zunächst zum Durchrieb der Bezugteiloberfläche führt, sich über die Zerstörung des darunterliegenden Polsterteils fortsetzt und schließlich den Abriss der gesamten Seitenwange bewirkt.

Mittels eines Gradienten hinsichtlich der Aufbringdichte kann die Beschichtung vorteilhaft vor allem da aufgebracht sein, wo sie am meisten benötigt wird. Vorteilhaft ist es also, wenn ein Wert eines Verhältnisses eines Gesamtinhalts der ersten Oberflächenanteile zu einem Gesamtinhalt der zweiten Oberflächenanteile sich in einem Verlauf einer Längsrichtung, einer Breitenrichtung und/oder einer Höhenrichtung des Fahrzeugsitzes ändert.

Der Wert des oben genannten Verhältnisses entspricht bevorzugt der Aufbringdichte. Besonders bevorzugt nimmt dieser Wert in Breitenrichtung des Sitzes ausgehend von einer Außenseite des Sitzes hin zu einer virtuellen Ebene, welche den Sitz in Breitenrichtung mittig teilt, ab. Beispielsweise ist diese Abnahme konstant.

Da beim Tiefziehverfahren Toleranzen der Materialeigenschaften sowie der Prozessparameter (beispielsweise hinsichtlich der Temperatur oder der Einstellung eines verwendeten Spannrahmens, bei unterschiedlichen Bearbeitern etc.) auftreten können, ist es möglich, dass eine genaue Positionierung der partiell beschichteten Oberflächen nicht immer gewährleistet werden kann. Eine mit einem Gradienten versehene Aufbringdicke hat zusätzlich den positiven Effekt, dass hinsichtlich der Beschichtung sozusagen ein diffuser Übergang zwischen Bereichen mit einer hohen Aufbringdicke und Bereichen mit einer niedrigen Aufbringdicke eingestellt werden kann. Damit können Positionierungsfehler der Beschichtung, welche sich vor allem bei scharfen geometrischen Übergängen des Sitzteils bemerkbar machen würden, aus Sicht des Betrachters retuschiert werden. Ein solcher scharfer geometrischer Übergang existiert beispielsweise bei einem zwischen den inneren Abschnitten und den Wangenabschnitten angeordneten Kanal.

Für die Einstellung eines diffusen Übergangs ist es besonders vorteilhaft, wenn der Wert des oben genannten Verhältnisses in zumindest einer der oben genannten Richtungen des Fahrzeugsitzes nicht mit einer konstanten, sondern mit einer variierenden Änderung versehen ist.

Die Beschichtung selbst ist hinsichtlich ihrer Dicke bevorzugt konstant ausgestaltet. Es ist also vorteilhaft, wenn die Beschichtung eine homogene Schichtdicke aufweist, deren Wert bevorzugt in einem Bereich von 80 µm bis 200 µm liegt. Dadurch wird verhindert, dass einzelne Beschichtungsteile ausgehend von dem Bezugteil über die anderen Beschichtungsteile hervorstehen und leichter abgerissen werden.

Wenn die Beschichtung als eine Art Muster auf den Bezugteilen aufgebracht ist, kann zusätzlich zur Funktion ein Designmerkmal geschaffen werden. Beispielsweise sind die ersten Oberflächenanteile jeweils in Form eines Kreises und/oder eines regelmäßigen Polygons ausgestaltet.

Ferner ist es möglich, dass die ersten Oberflächenanteile in unterschiedlichen Farben und/oder Formen vorliegen. Beispielsweise liegen die ersten Oberflächenanteile in Form eines Quadrats, einer Raute, eines Rechtecks und/oder eines Dreiecks vor.

Ebenfalls bevorzugt ist es, wenn die ersten Oberflächenanteile jeweils in Form eines regelmäßigen Hexagons und untereinander identisch ausgestaltet sind. Ferner ist es bevorzugt, wenn die zweiten Oberflächenanteile jeweils in Form eines regelmäßigen Hexagons und untereinander identisch ausgestaltet sind.

Unabhängig von der Form der ersten und zweiten Oberflächenanteile ist es bevorzugt, wenn jeder der ersten Oberflächenanteile unmittelbar benachbart zu mindestens einem der zweiten Oberflächenanteile angeordnet ist.

Neben der oben erwähnten Beschichtung können natürlich weitere Beschichtungen auf das Bezugteil aufgebracht sein. Denkbar ist es, wenn weitere Funktionen des Sitzteils mittels einer entsprechenden Beschichtung einstellbar sind. So ist es denkbar, beim Sitzteil neben einer verbesserten Abriebeigenschaft auch eine Verschmutzung zu minimieren, eine Reinigung zu erleichtern, eine Leitfähigkeit zu beeinflussen, eine Flammhemmung, eine Schnittfestigkeit, eine Haptik zu verbessern oder eine Rutsch- bzw. Gleitfähigkeit zu verändern.

Weitere Vorteile, Ziele und Eigenschaften vorliegender Erfindung werden anhand anliegender Zeichnung und nachfolgender Beschreibung erläutert, in welchen beispielhaft ein erfindungsgemäßer Fahrzeugsitz oder Teile davon dargestellt und beschrieben sind. In der Zeichnung zeigen:
- Fig. 1: eine perspektivische Darstellung eines erfindungsgemäßen Fahrzeugsitzes;
- Fig. 2a-c: Draufsichten auf verschieden ausgestaltete Sitzteile des Fahrzeugsitzes aus Fig. 1;
- Fig. 3a-c: schematische Darstellungen von Ausschnitten verschieden ausgestalteter Beschichtungen;
- Fig. 4a, b: Details der verwendeten Materialien.

Gezeigt ist in allen Figuren zur Verdeutlichung der Relativpositionen jeweils ein Koordinatensystem, welches eine Längsrichtung 1x, eine Breitenrichtung 1y und eine Höhenrichtung 1z des Fahrzeugsitzes 1 umfasst.

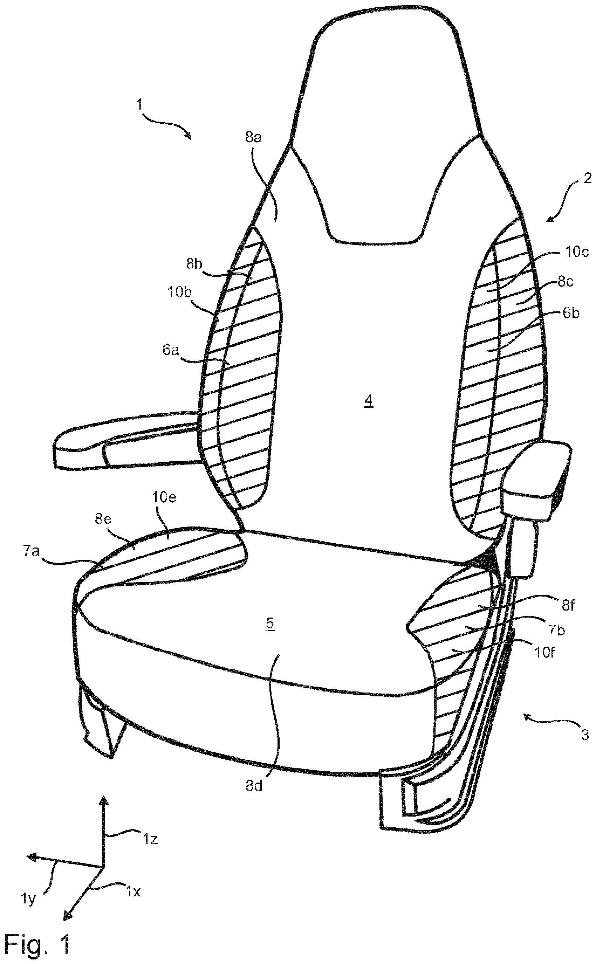

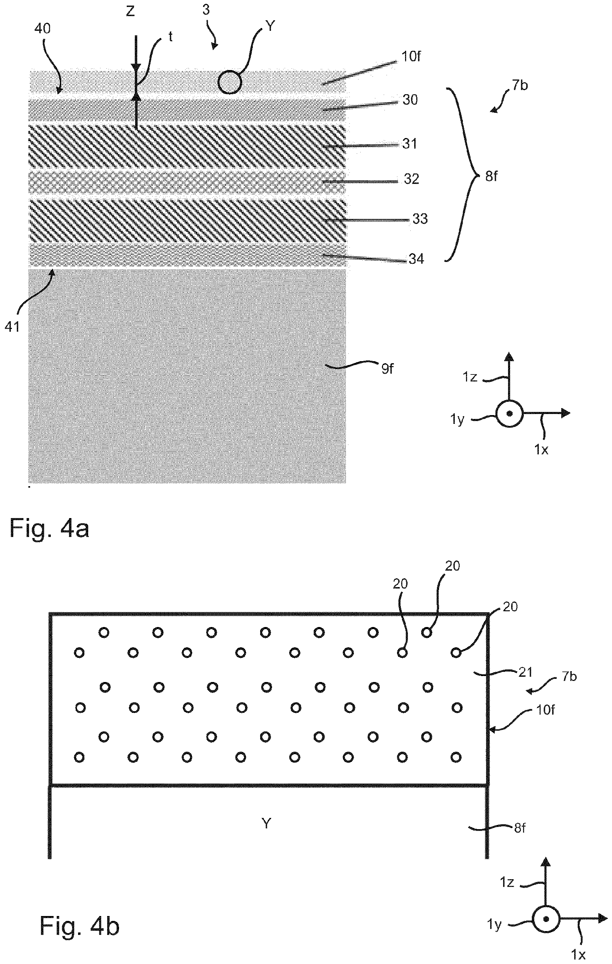

Anhand der Fig. 1 ist ein Fahrzeugsitz 1 für ein Fahrzeug mit einem Rückenlehnenteil 2 und einem Sitzteil 3 gezeigt, wobei das Rückenlehnenteil 2 und das Sitzteil 3 jeweils einen inneren Abschnitt 4, 5 und beidseits seitlich des inneren Abschnitts 4, 5 angeordnete Wangenabschnitte 6a, 6b, 7a, 7b aufweisen. Die inneren Abschnitte 4, 5 und die Wangenabschnitte 6a, 6b, 7a, 7b weisen jeweils ein Polsterteil 9f (nicht dargestellt gemäß Fig. 1, siehe Fig. 4a) und ein dieses zumindest teilweise umgebendes Bezugteil 8a, 8b, 8c, 8d, 8e, 8f auf.

Gezeigt ist, dass auf vier 8b, 8c, 8e, 8f der Bezugteile 8a-8f vollflächig eine abriebfeste Beschichtung 10b, 10c, 10e, 10f angeordnet ist (schraffiert dargestellt), welche eine höhere Härte und/oder Steifigkeit als das mindestens eine Bezugteil 8b, 8c, 8e, 8f aufweist. Die vier Bezugteile 8b, 8c, 8e, 8f sind vorliegend den Wangenabschnitte 6a, 6b, 7a, 7b des Rückenlehnenteils 2 und des Sitzteils 3 zugeordnet.

Vorliegend ist die dem Fahrer zugewandte Schicht des Fahrzeugsitzes 1, mithin die oberste Schicht ausgehend vom Polsterteil als innerster Schicht, entweder mittels des Bezugteils 8a, 8b oder mittels der abriebfesten Beschichtung 10b, 10c, 10e, 10f ausgestaltet. Darüber hinaus ist also der Sitz frei von weiteren, auf den Bezugteilen 8a-8f angeordneten Schichten und/oder sonstigen Elementen. Vorliegend sind die Eigenschaften der Beschichtung 10b, 10c, 10e, 10f wie Härte oder Zugfestigkeit über eine gesamte Dicke t (siehe Fig. 4a), Länge und Breite der Beschichtung 10b, 10c, 10e, 10f gleich.

Der gezeigte Fahrzeugsitz 1 wurde hergestellt, indem die Beschichtung 10b, 10c, 10e, 10f bereits vorab auf das jeweilige Bezugteil 8b, 8c, 8e, 8f aufgebracht wurde, bevor das Bezugteil 8b, 8c, 8e, 8f mittels Tiefziehens geformt wurde. Anschließend wurden die Bezugteile 8a, 8b, 8c des Rückenlehnenteils 2 miteinander und unabhängig davon die Bezugteile 8d, 8e, 8f des Sitzteils 3 miteinander in eine Form eingelegt und mit einem weiteren Material, welches nach Aushärten das Polsterteil (nur 9f gezeigt anhand Fig. 4a) ausbildet, hinterschäumt. Es sind also alle Bezugteile 8d, 8e, 8f und alle Polsterteile (nur 9f gezeigt) des Sitzteils 3 zueinander einstückig ausgebildet. Ebenfalls sind alle Bezugteile 8a, 8b, 8c und alle Polsterteile (nicht gezeigt) des Rückenlehnenteils 2 zueinander einstückig ausgebildet.

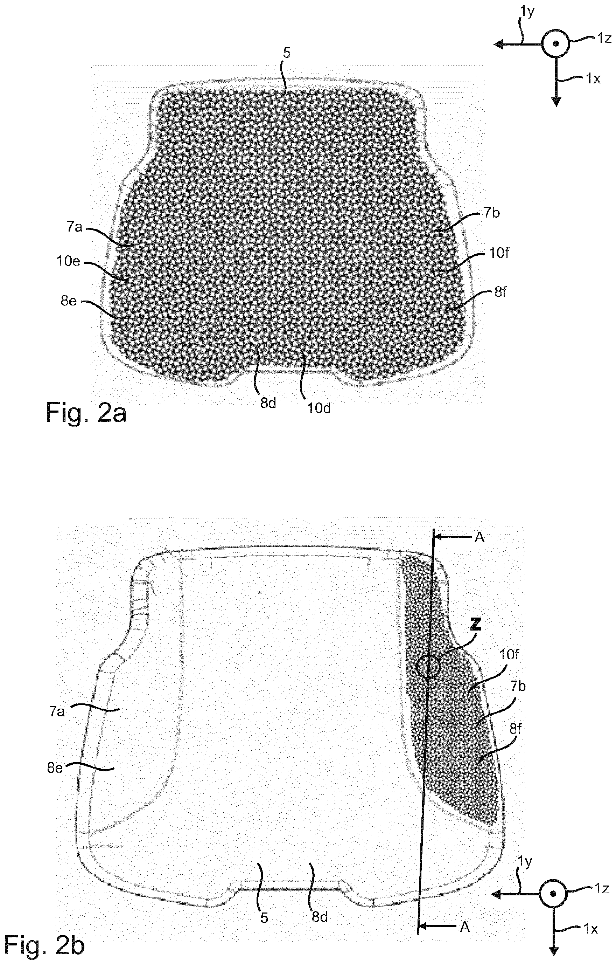

Die Fig. 4a zeigt einen Ausschnitt Z einer Querschnittsansicht durch die Linie A-A aus der Fig. 2b und veranschaulicht anhand des Beispiels des linken Wangenabschnitts 7b des Sitzteils 3, dass die Beschichtung 10f auf einer ersten Oberfläche 40 des Bezugteils 8f und das Polsterteil 9f auf einer zweiten Oberfläche 41 des Bezugteils 8f angeordnet sind, wobei die erste Oberfläche 40 abgewandt zur zweiten Oberfläche 41 angeordnet ist.

Vorliegend sind bei jedem Wangenabschnitt 6a, 6b, 7a, 7b, welcher mit einer Beschichtung versehen ist, das Bezugteil 8b, 8c, 8e, 8f, das Polsterteil (nur 9f gezeigt) und die Beschichtung 10b, 10c, 10e, 10f mechanisch fest miteinander verbunden.

Vorliegend umfassen alle gezeigten Bezugteile 8a-8f ein Kunstleder aus PVC (Polyvinylchlorid). Die Beschichtung 10b, 10c, 10e, 10f wurde über Schablonendruck auf das Bezugteil 8b, 8c, 8e, 8f aufgebracht.

Die Fig. 4b zeigt eine Vergrößerung des Ausschnitts Y der Fig. 4a und veranschaulicht anhand des Beispiels des linken Wangenabschnitts 7b des Sitzteils 3, dass die abriebfeste Beschichtung 10f Partikel 20 aufweist, welche vorliegend auf Keramik basieren und in eine Bindermatrix 21 aus einem Polymerkleber eingebunden sind.

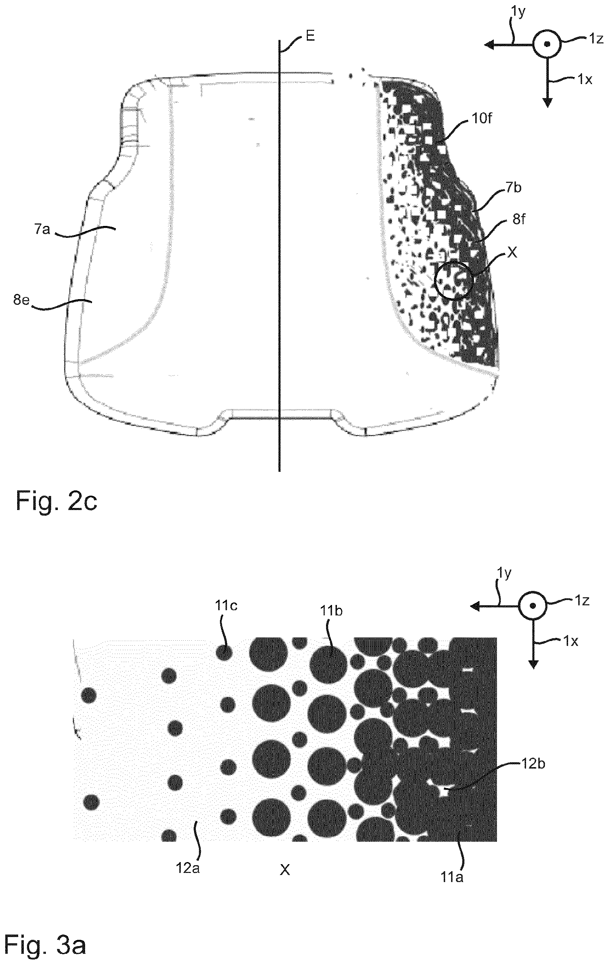

Gemäß der Ausführungsbeispiele anhand der Fig. 1, 2b und 2c ist gezeigt, dass die abriebfeste Beschichtung 10b, 10c, 10e, 10f ausschließlich auf allen 8c, 8d, 8e, 8f oder nur einem 8f der Bezugteile 8c, 8d, 8e, 8f der Wangenabschnitte 6a, 6b, 7a, 7b angeordnet ist. Vorliegend sind bei den Ausführungsbeispielen der Fig. 1, 2b und 2c die inneren Abschnitte 4, 5 jeweils frei von der Beschichtung.

Gemäß der Fig. 1 sind also nur alle Bezugteile 8b, 8c, 8e, 8f der Wangenabschnitte 6a, 6b, 7a, 7b mit einer Beschichtung 10b, 10c, 10e, 10f versehen und die inneren Abschnitte 4, 5 jeweils frei von der Beschichtung.

Gemäß der Fig. 2a ist nur das Sitzteil 3 gezeigt, bei welchem alle Bezugteile 8e, 8f der Wangenabschnitte 7a, 7b sowie das Bezugteil 8d des inneren Abschnitts 5 jeweils mit einer vollflächigen Beschichtung 10e, 10f, 10d versehen sind.

Gemäß der Fig. 2b ist nur das Sitzteil 3 gezeigt, bei welchem nur das Bezugteil 8f des linken Wangenabschnitt 7b mit einer vollflächigen Beschichtung 10f versehen ist.

Gemäß der Fig. 2c ist nur das Sitzteil 3 gezeigt, bei welchem nur das Bezugteil 8f des linken Wangenabschnitt 7b mit einer Beschichtung 10f versehen ist, welche in Breitenrichtung 1y einen Gradienten hinsichtlich ihrer Aufbringdichte aufweist.

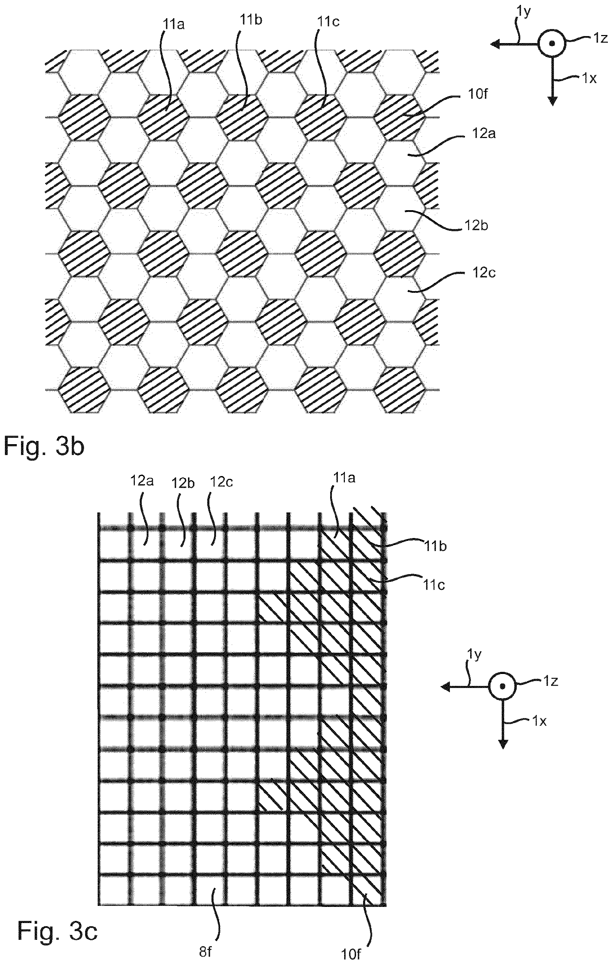

Die Fig. 3a zeigt einen Ausschnitt X der Fig. 2c. Die Figuren 3b und 3c sind jeweils alternative Ausführungsformen, welche jedoch hinsichtlich der Position den gleichen Ausschnitt X darstellen sollen. Die Figuren 3a, 3b und 3c zeigen nun anhand des linken Wangenabschnitts 7b jeweils Beispiele, in welcher Form die Beschichtung 10f ausgestaltet sein kann. Bei jeder genannten Ausführungsform erstreckt sich die Beschichtung 10f lediglich über einen Teilbereich des Bezugteils 8f. Dieser Teilbereich ist gemäß der Fig. 3a und 3b jeweils in mehrere einzelne Bereiche aufgeteilt, wohingegen er gemäß der Fig. 3c einen zusammenhängenden Bereich darstellt.

Es weist also gemäß der Ausführungsformen der Fig. 3a, 3b, 3c das mindestens eine Bezugteil 8f erste Oberflächenanteile 11a, 11b, 11c (exemplarisch markiert), welche vollflächig mit der abriebfesten Beschichtung 10f versehen sind, und zweite Oberflächenanteile 12a, 12b, 12c (ebenfalls exemplarisch markiert), welche frei von der abriebfesten Beschichtung 10f sind, auf.

Gemäß der Ausführungsform der Fig. 3b sind die ersten Oberflächenanteile 11a, 11b, 11c und die zweiten Oberflächenanteile 12a, 12b, 12c homogen über die gesamte Oberfläche des Bezugteils 8f verteilt. Es ist die Aufbringdichte über die gesamte Oberfläche des Bezugteils 8f konstant.

Gemäß der Ausführungsform der Fig. 3a und 3c ändert sich ein Wert eines Verhältnisses eines Gesamtinhalts der ersten Oberflächenanteile 11a, 11b, 11c zu einem Gesamtinhalt der zweiten Oberflächenanteile 12a, 12b, 12c in einem Verlauf einer Breitenrichtung 1y des Fahrzeugsitzes 1. Vorliegend nimmt dieser Wert in Breitenrichtung 1y des Fahrzugsitzes 1 ausgehend von einer Außenseite des Fahrzeugsitzes 1 hin zu einer virtuellen Ebene E (siehe Fig. 2c), welche den Fahrzeugsitz 1 in Breitenrichtung 1y mittig teilt, ab. Gemäß der Ausführungsform der Fig. 3c ist diese Abnahme konstant. Gemäß der Ausführungsform der Fig. 3a ist diese Abnahme in Breitenrichtung 1y variierend.

Aus der Fig. 4a ist weiterhin zu sehen, dass die Beschichtung 10f eine homogene Schichtdicke t aufweist, deren Wert vorliegend bei etwa 150 µm liegt. Außerdem ist gezeigt, dass das Bezugteil 8f vorliegend mehrere Schichten 30-34 umfasst, welche zwischen der Beschichtung 10f und dem Polsterteil 9f in der Reihenfolge 30, 31, 32, 33, 34 angeordnet sind, wovon eine dem Polsterteil 9f zugewandte Schicht ein Primer 34 ist, die Schichten 31, 33 Vinylschichten darstellen, die Schicht 32 der Textilträger sowie die Schicht 30 die Finish-Schicht ist. Wie oben bereits erwähnt kann anstelle von Vinyl bei den Schichten 31, 33 auch ein anderes Trägermaterial (insbesondere ein Material auf PU- oder Textil-Basis) verwendet werden.

Alle gezeigten Schichten 10f, 30, 31, 32, 33, 34 und 9f sind dabei jeweils mechanisch fest mit der oder den Nachbarschichten verbunden; die gezeigten Spalte zwischen den einzelnen Schichten dienen lediglich der Übersichtlichkeit.

Gemäß der Fig. 3a sind Teile 11b, 11c der ersten Oberflächenanteile 11a, 11b, 11c jeweils in Form eines Kreises ausgestaltet.

Gemäß der Fig. 3b sind alle ersten Oberflächenanteile 11a, 11b, 11c jeweils in Form eines regelmäßigen Hexagons ausgestaltet. Zudem sind diese untereinander identisch ausgestaltet. Auch die zweiten Oberflächenanteile 12a, 12b, 12c sind jeweils in Form eines regelmäßigen Hexagons und untereinander identisch ausgestaltet. Dabei sind die gezeigten Grenzlinien zwischen zwei benachbarten zweiten Oberflächenanteilen 12a, 12b, 12c zur Veranschaulichung eingezeichnet. Sie können zudem als Strukturlinien des verwendeten Materials vorliegen. Gemäß der Fig. 3b sind alle ersten Oberflächenanteile 11a, 11b, 11c jeweils in Form eines Quadrats ausgestaltet.

Gemäß der Fig. 3b ist jeder der ersten Oberflächenanteile 11a, 11b, 11c unmittelbar benachbart zu sechs zweiten Oberflächenanteilen 12a, 12b, 12c angeordnet.

Es versteht sich, dass es sich bei den vorstehend erläuterten Ausführungsbeispielen lediglich um beispielhafte Ausgestaltungen des erfindungsgemäßen Systems handelt. Insofern beschränkt sich die Ausgestaltung der Erfindung nicht auf diese Ausführungsbeispiele.

### Bezugszeichenliste

- 1: Fahrzeugsitz
- 1x: Längsrichtung
- 1y: Breitenrichtung
- 1z: Höhenrichtung
- 2: Rückenlehnenteil
- 3: Sitzteil
- 4, 5: innerer Abschnitt
- 6a, 6b, 7a, 7b: Wangenabschnitt
- 9f: Polsterteil
- 8a, ..., 8f: Bezugteil
- 10f: Beschichtung
- 11a, 11b, 11c: erste Oberflächenanteile
- 12a, 12b, 12c: zweite Oberflächenanteile
- 20: Partikel
- 21: Bindermatrix
- 30: Finish
- 31, 33: Vinyl
- 32: Textilträger
- 34: Primer
- 40: erste Oberfläche
- 41: zweite Oberfläche
- t: Schichtdicke

## Patentansprüche

1. Fahrzeugsitz (1) für ein Fahrzeug mit einem Rückenlehnenteil (2) und einem Sitzteil (3), welche jeweils beide einen inneren Abschnitt (4, 5) und beidseits seitlich des inneren Abschnitts (4, 5) angeordnete Wangenabschnitte (6a, 6b, 7a, 7b) aufweisen, wobei die inneren Abschnitte (4, 5) und die Wangenabschnitte (6a, 6b, 7a, 7b) jeweils ein Polsterteil (9f) und ein dieses zumindest teilweise umgebendes Bezugteil (8a, 8b, 8c, 8d, 8e, 8f) aufweisen,
wobei,
auf mindestens eines der Bezugteile (8b, 8c, 8d, 8e, 8f) zumindest partiell eine abriebfeste Beschichtung (10b, 10c, 10d, 10e, 10f) angeordnet ist, welche eine höhere Härte und/oder Steifigkeit als das mindestens eine Bezugteil (8b, 8c, 8d, 8e, 8f) aufweist. **dadurch gekennzeichnet, dass**
die abriebfeste Beschichtung (10b, 10c, 10d, 10e, 10f) Partikel (20) aufweist, welche auf Glas, Keramik oder Metall basieren und bevorzugt in eine Bindermatrix (21) aus einem Polymerkleber eingebunden sind.

2. Fahrzeugsitz (1) nach Anspruch 1,
**dadurch gekennzeichnet, dass**
die abriebfeste Beschichtung (10b, 10c, 10e, 10f) ausschließlich auf mindestens einem (8b, 8c, 8e, 8f) der Bezugteile (8c, 8d, 8e, 8f) der Wangenabschnitte (6a, 6b, 7a, 7b) angeordnet ist.

3. Fahrzeugsitz (1) nach einem der vorhergehenden Ansprüche,
**dadurch gekennzeichnet, dass**
das mindestens eine Bezugteil (8b, 8c, 8e, 8f) erste Oberflächenanteile (11a, 11b, 11c), welche vollflächig mit der abriebfesten Beschichtung (10b, 10c, 10e, 10f) versehen sind, und zweite Oberflächenanteile (12a, 12b, 12c), welche frei von der abriebfesten Beschichtung (10b, 10c, 10e, 10f) sind, aufweist,
wobei ein Wert eines Verhältnisses eines Gesamtinhalts der ersten Oberflächenanteile (11a, 11b, 11c) zu einem Gesamtinhalt der zweiten Oberflächenanteile (12a, 12b, 12c) sich in einem Verlauf einer Längsrichtung (1x), einer Breitenrichtung (1y) und/oder einer Höhenrichtung (1z) des Fahrzeugsitzes (1) ändert.

4. Fahrzeugsitz (1) nach einem der vorhergehenden Ansprüche,
**dadurch gekennzeichnet, dass**
die Beschichtung (10f) eine homogene Schichtdicke (t) aufweist, deren Wert bevorzugt in einem Bereich von 80 µm bis 200 µm liegt.

5. Fahrzeugsitz (1) nach einem der Ansprüche 3-4,
**dadurch gekennzeichnet, dass**
die ersten Oberflächenanteile (11a, 11b, 11c) jeweils in Form eines Kreises und/oder eines regelmäßigen Polygons ausgestaltet sind.

6. Fahrzeugsitz (1) nach Anspruch 5,
**dadurch gekennzeichnet, dass**
die ersten Oberflächenanteile (11a, 11b, 11c) und/oder die zweiten Oberflächenanteile (12a, 12b, 12c) jeweils in Form eines regelmäßigen Hexagons und untereinander identisch ausgestaltet sind.

7. Fahrzeugsitz (1) nach einem der Ansprüche 3-6,
**dadurch gekennzeichnet, dass**
jeder der ersten Oberflächenanteile (11a, 11b, 11c) unmittelbar benachbart zu mindestens einem der zweiten Oberflächenanteile (12a, 12b, 12c) angeordnet ist.

## Claims

1. Vehicle seat (1) for a vehicle having a backrest part (2) and a seat part (3), each having an inner portion (4, 5) and side bolster portions (6a, 6b, 7a, 7b) arranged laterally on both sides of the inner portion (4, 5), the inner portions (4, 5) and the side bolster portions (6a, 6b, 7a, 7b) each having a cushion part (9f) and an upholstery part (8a, 8b, 8c, 8d, 8e, 8f) at least partially surrounding the cushion part (9f),
wherein
an abrasion-resistant coating (10b, 10c, 10d, 10e, 10f) that has a higher hardness and/or stiffness than the at least one upholstery part (8b, 8c, 8d, 8e, 8f) being at least in part arranged on at least one of the upholstery parts (8b, 8c, 8d, 8e, 8f), **characterised in that**
the abrasion-resistant coating (10b, 10c, 10d, 10e, 10f) has particles (20) that are based on glass, ceramic or metal and preferably bound in a binder matrix (21) consisting of a polymer adhesive.

2. Vehicle seat (1) according to claim 1,
**characterised in that**
the abrasion-resistant coating (10b, 10c, 10e, 10f) is arranged solely on at least one (8b, 8c, 8e, 8f) of the upholstery parts (8c, 8d, 8e, 8f) of the side bolster portions (6a, 6b, 7a, 7b).

3. Vehicle seat (1) according to one of the preceding claims,
**characterised in that**
the at least one upholstery part (8b, 8c, 8e, 8f) has first surface portions (11a, 11b, 11c) that are provided with the abrasion-resistant coating (10b, 10c, 10e, 10f) over their entire surface and second surface portions (12a, 12b, 12c) that are free of the abrasion-resistant coating (10b, 10c, 10e, 10f), wherein a value of a ratio of a total content of the first surface portions (11a, 11b, 11c) to a total content of the second surface portions (12a, 12b, 12c) changes in a course of a length direction (1x), a width direction (1y), and/or a height direction (1z) of the vehicle seat (1).

4. Vehicle seat (1) according to one of the preceding claims,
**characterised in that**
the coating (10f) has a homogeneous layer thickness (t) whose value is preferably within a range of 80 µm to 200 µm.

5. Vehicle seat (1) according to one of the claims 3-4,
**characterised in that**
the first surface portions (11a, 11b, 11c) are each in the shape of a circle and/or a regular polygon.

6. Vehicle seat (1) according to claim 5,
**characterised in that**
the first surface portions (11a, 11b, 11c) and/or the second surface portions (12a, 12b, 12c) are each in the shape of a regular hexagon and identical to each other.

7. Vehicle seat (1) according to one of the claims 3-6,
**characterised in that**
each of the first surface portions (11a, 11b, 11c) is arranged directly adjacent to at least one of the second surface portions (12a, 12b, 12c).

## Revendications

1. Siège de véhicule (1) pour un véhicule, comportant une partie dossier (2) et une partie assise (3), lesquelles présentent toutes deux une section interne (4, 5) et des sections de joue (6a, 6b, 7a, 7b) disposées latéralement de part et d'autre de la section interne (4, 5), les sections internes (4, 5) et les sections de joue (6a, 6b, 7a, 7b) présentant chacune une partie de rembourrage (9f) et une partie d'habillage (8a, 8b, 8c, 8d, 8e, 8f) entourant celle-ci au moins partiellement,
un revêtement résistant à l'abrasion (10b, 10c, 10d, 10e, 10f) étant disposé au moins partiellement sur au moins l'une des parties d'habillage (8b, 8c, 8d, 8e, 8f), lequel revêtement présente une dureté et/ou une rigidité plus élevée que ladite au moins une partie d'habillage (8b, 8c, 8d, 8e, 8f)
**caractérisé par le fait que**
le revêtement résistant à l'abrasion (10b, 10c, 10d, 10e, 10f) présente des particules (20), lesquelles sont à base de verre, de céramique ou de métal et sont de préférence incorporées dans une matrice de liant (21) faite d'un adhésif polymère.

2. Siège de véhicule (1) selon la revendication 1,
**caractérisé par le fait que**
le revêtement résistant à l'abrasion (10b, 10c, 10e, 10f) est disposé exclusivement sur au moins l'une (8b, 8c, 8e, 8f) des parties d'habillage (8c, 8d, 8e, 8f) des sections de joue (6a, 6b, 7a, 7b).

3. Siège de véhicule (1) selon l'une des revendications précédentes,
**caractérisé par le fait que**
ladite au moins une partie d'habillage (8b, 8c, 8e, 8f) présente des premières parties de surface (11a, 11b, 11c), lesquelles sont munies sur toute leur surface du revêtement résistant à l'abrasion (10b, 10c, 10e, 10f), et des secondes parties de surface (12a, 12b, 12c), lesquelles sont exemptes du revêtement résistant à l'abrasion (10b, 10c, 10e, 10f),
dans lequel une valeur d'un rapport d'une intégralité des premières parties de surface (11a, 11b, 11c) à une intégralité des secondes parties de surface (12a, 12b, 12c) change tout au long d'une direction longitudinale (1x), d'une direction de largeur (1y) et/ou d'une direction de hauteur (1z) du siège de véhicule (1).

4. Siège de véhicule (1) selon l'une des revendications précédentes,
**caractérisé par le fait que**
le revêtement (10f) présente une épaisseur de couche homogène (t), dont la valeur se situe de préférence dans une plage de 80 µm à 200 µm.

5. Siège de véhicule (1) selon l'une des revendications 3 et 4,
**caractérisé par le fait que**
les premières parties de surface (11a, 11b, 11c) sont conçues chacune dans la forme d'un cercle et/ou d'un polygone régulier.

6. Siège de véhicule (1) selon la revendication 5,
**caractérisé par le fait que**
les premières parties de surface (11a, 11b, 11c) et/ou les secondes parties de surface (12a, 12b, 12c) sont conçues chacune dans la forme d'un hexagone régulier et identiques les unes aux autres.

7. Siège de véhicule (1) selon l'une des revendications 3 à 6,
**caractérisé par le fait que**
chacune des premières parties de surface (11a, 11b, 11c) est disposée de manière immédiatement adjacente à au moins l'une des secondes parties de surface (12a, 12b, 12c).
